**Europäisches Patentamt**

**European Patent Office**

**Office européen des brevets**

(19)

(11) **EP 1 351 479 A1**

(12) **EUROPEAN PATENT APPLICATION**

| | |
|---|---|
| (43) Date of publication:<br>**08.10.2003 Bulletin 2003/41** | (51) Int Cl.$^7$: **H04M 9/08** |

(21) Application number: **02007621.2**

(22) Date of filing: **04.04.2002**

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI** | • **Szabò, Tamàs**<br> **1165 Budapest (HU)**<br>• **Pàsztor, Gàbor**<br> **2800 Tatabànya (HU)** |
| (71) Applicant: **Castel GmbH**<br>**71579 Spiegelberg (DE)** | (74) Representative: **Schäfer, Wolfgang**<br>**Dreiss Fuhlendorf, Steimle & Becker,**<br>**Gerokstrasse 1,**<br>**Postfach 10 37 62**<br>**70032 Stuttgart (DE)** |
| (72) Inventors:<br>• **Nagy, Gàbor**<br>**1032 Budapest (HU)** | |

(54) **Generating an undisturbed signal out of an audio signal including a disturbing signal**

(57)     A method is described for generating an undisturbed signal (S) out of an audio signal (Y) including a disturbing signal (X). the method comprises the steps of: estimating (23, 24) autocorrelation matrices and cross-correlation vectors of the equation of the Wiener filtering problem, calculating (27) the coefficients of the solution vector of the equation of the Wiener filtering problem, evaluating (28) the quality of the calculated coefficients, controlling (29) the estimation step depending on the quality of the calculated coefficients, generating (30) a correction signal (K) out of the disturbing signal (X) depending on the calculated coefficients, and correcting the audio signal (Y) depending on the correction signal (K).

Fig. 2

## Description

Prior Art

The invention relates to a method of generating an undisturbed signal out of an audio signal including a disturbing signal.

It is known to build up a so-called acoustic echo cancellation system. There are two sound sources in such a system, one is the subject of interest, e.g. a speaker, and the other is a disturbance. The mixture of these sounds is recorded by a microphone. A reference of the disturbance is also available.

The acoustic echo cancellation system adapts itself such that its output only includes the speech signal of the speaker and no disturbance anymore.

For that purpose, the acoustic echo cancellation system generates a correction signal which depends on the signal received by the microphone and on the signal output by the loudspeaker. This correction signal is generated such that it cancels the signal of the loudspeaker so that this disturbing signal is rejected as much as possible. In order to generate the correction signal, mathematical algorithms are used. One possibility would be to use the equation of the so-called Wiener filtering problem. However, this would require very high processing power in order to fulfill real time requirements.

Object and Advantages of the Invention

It is therefore an object of the invention to provide a method of generating an undisturbed signal out of an audio signal including a disturbing signal which is able to fulfill real time requirements with lower processing power.

The invention solves this object with a method of generating an undisturbed signal out of an audio signal including a disturbing signal comprising the steps of: estimating auto-correlation matrices and cross-correlation vectors of the equation of the Wiener filtering problem, calculating the coefficients of the solution vector of the equation of the Wiener filtering problem, evaluating the quality of the calculated coefficients, controlling the estimation step depending on the quality of the calculated coefficients, generating a correction signal out of the disturbing signal depending on the calculated coefficients, and correcting the audio signal depending on the correction signal.

The method according to the invention provides a feedback path from the solution vector of the equation of the Wiener filtering problem back to the estimation of the coefficients of the auto-correlation matrix and the cross-correlation vector of the equation of the Wiener filtering. This feedback path allows an adaptation of the aforementioned coefficients such that the quality of the solution vector is increased.

Furthermore, in the case of multi channel disturbing signals, the method according to the invention allows to calculate the equation of the multi-channel Wiener filtering problem in a recursive form. This is done by partitioning the matrices of the equation of the Wiener filtering problem.

Therefore, the invention provides a method for generating an undisturbed signal with high quality under real time conditions.

In advantageous embodiments of the invention, the calculation step may comprise the steps of dividing the equation of the Wiener filtering problem into a diagonal part and some non-diagonal partitions, wherein the diagonal part is a Toeplitz matrix and the non-diagonal partitions are Toeplitz-like matrices so that the diagonal part and the non-diagonal partitions result in the aforementioned recursive form of the equation of the Wiener filtering problem.

The invention together with further objects, advantages, features and aspects thereof will be more clearly understood from the following description taken in connection with the accompanying drawings.

Description of Embodiments of the Invention

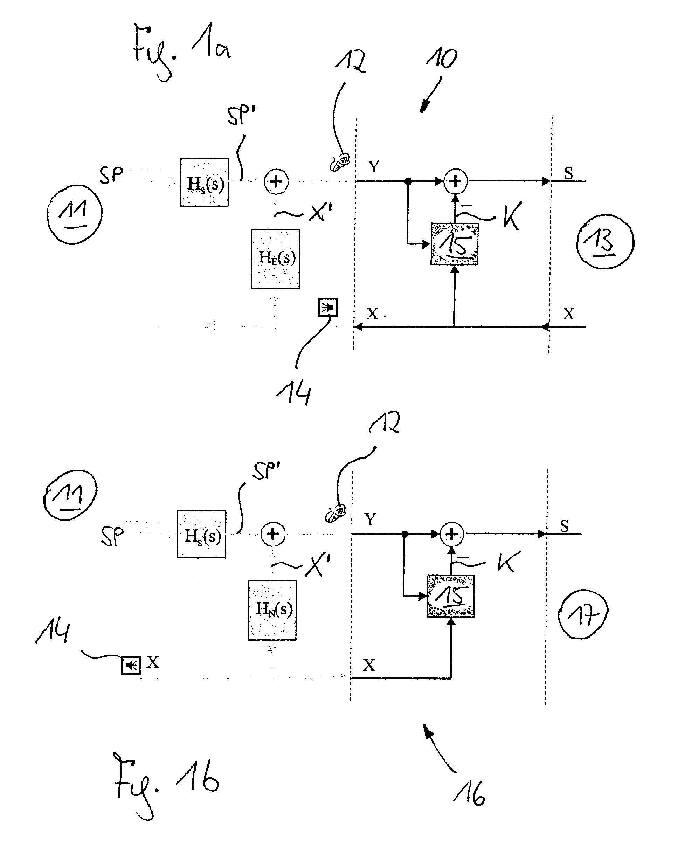

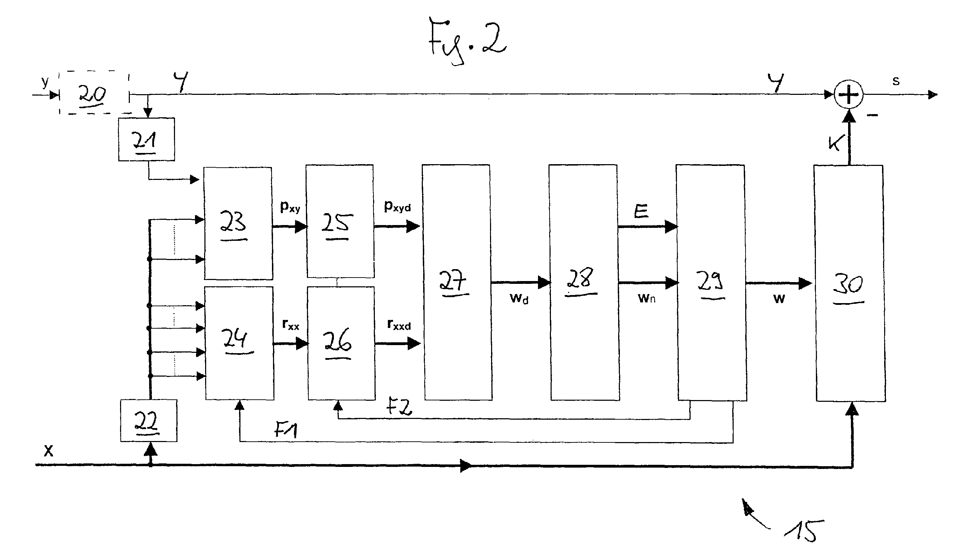

Figure 1a is a schematic block diagram of an acoustic echo cancellation system, figure 1b is a schematic block diagram of a referenced noise cancellation system, and figure 2 is a schematic block diagram of an embodiment of a method according to the invention used in the systems of figures 1a and 1b.

Figure 1a shows an acoustic echo cancellation system 10. This is a special case of the echo cancellation problem in a loudspeaker-enclosure-microphone (LEM) system where the voice of a far-end speaker shall be eliminated. Examples of such systems are hands-free telephone sets, audio/video conference systems, and the like.

A local speaker 11 who is lecturing for example, creates an audio signal SP. This signal SP is influenced by a function $H_S(s)$ which represents the room between the speaker and a microphone 12. The resulting signal SP' is added to a signal X' which will be described below. The microphone 12, therefore, receives a signal Y which is the sum of the signals SP' and X' and which is therefore different from the signal SP. This signal Y is adapted as described later and a signal S is generated.

The voice of the far-end speaker is the output of an LEM system 13 which is reproduced by a loudspeaker 14 as a signal X. The signal X generated by the loudspeaker 14 may be heard by the speaker 11. The signal X is influenced by a function $H_E(s)$ which represents the room between the loudspeaker 14 and the microphone 12. The resulting signal X' is added, as already mentioned, to the signal SP'. The signal X' may be recognized as a disturbing signal as it disturbs the signal SP' created by the speaker 11.

As mentioned, the acoustic echo cancellation system 10 which has an output signal Y, is adapted in a way to minimize the disturbance. For that purpose, a method 15 is provided. The method 15 receives the signal Y and the signal X as input signals, both in electronic form. Depending on these input signals, the method 15 generates an output signal K which is subtracted from the signal Y. The resulting signal is the already mentioned signal S which is then provided to the LEM system 13.

In the acoustic echo cancellation system 10 of figure 1a, the method 15 adapts this system 10 such that the signal S provided to the LEM system 13 only includes the audio signal SP of the speaker 11 and minimized disturbance from the signal X output by the loudspeaker 14. As a result, the method 15 cancels the acoustic echo which is present due to the LEM system 13.

Figure 1b shows a referenced noise cancellation system 16. Features and signals which are similar to figure 1a are characterized by the same reference numerals.

In the system 16 of figure 1b, the signal S which is a function of the signal Y received by the microphone 12 and the signal K generated by the method 15, is received e.g. by a speech recognition system 17 or the like.

The loudspeaker 14 or any other local noise source, produces any kind of noise, e.g. the output signal of a television set disturbs the speaker SP. The signal X output by the loudspeaker 14 is influenced by a function $H_N(s)$ which represents the room between the loudspeaker 14 and the microphone 12. The resulting signal X' is added to the signal SP'. The signal X' may again be recognized as a disturbing signal as it disturbs the audio signal SP' created by the speaker 11. Furthermore, the signal X of the loudspeaker 14 is forwarded in electronic form to the method 15.

In the referenced noise cancellation system 16 of figure 1b, the method 15 provides the signal Y received by the microphone 12 such that the signal S provided to the speech recognition system 17 includes the audio signal SP of the speaker 11 and minimized disturbance from the signal X output by the loudspeaker 14 or other local noise source. As a result, the method 15 cancels the noise generated by the loudspeaker 14.

Figure 2 shows the method 15 used in the systems 10 and 16 of figures 1a and 1b. As described in connection with figures 1a and 1b, the method 15 of figure 2 receives the signals Y and X as input signals and generates the output signal K which is then subtracted from the signal Y.

The method 15 may be realized as a number of computer instructions establishing a computer program. The computer program is stored on a computer-readable medium. The computer-readable medium may be introduced into a digital computer in order to carry out the method 15. The method 15 may also be realized by dedicated hardware, i.e. by an electrical circuit.

As shown in figure 2, the method 15 comprises the following steps and features:

The signal Y is forwarded to a block 20 which is drawn by dashed lines. This block 20 will be considered later. For the purpose of the subsequent description, the signal Y on both sides of the block 20 is assumed to be identical.

According to figure 2, the signal Y is provided to a de-correlation filter 21 and the signal X is provided to a number of de-correlation filters 22. From there, the de-correlated signal Y is forwarded to a first estimator 23 and the number of de-correlated signals X are forwarded to the first estimator 23 and a second estimator 24. The first estimator 23 relates to the cross-correlation of the signals X and Y and the second estimator 24 relates to the auto- and cross-correlations of the signals X and Y.

The so-called Wiener filtering problem is characterized by the following equation:

$$R * w = p_{xy}$$

with R being the auto-correlation matrix, w being the solution vector and $p_{xy}$ being the cross-correlation vector. The solution vector w can be calculated if the auto-correlation matrix R and the cross-correlation vector $p_{xy}$ are known. Further information concerning the Wiener filtering problem may be taken from B. Widrow, S. D. Stearns: "Adaptive Signal Processing", Prentice Hall, 1985.

The first estimator 23 evaluates an estimation for the cross-correlation vector $p_{xy}$. This evaluation depends on the de-correlated signals Y and X.

The second estimator 24 evaluates an estimation for the auto-correlation matrix R. The auto-correlation matrix R is assumed in a form of a so-called Toeplitz matrix. Thus, it can be represented by the auto-correlation vector $r_{xx}$. This evaluation depends on the de-correlated signals X. Further information concerning Toeplitz matrices may be taken from A. D. Poularikas: "The Handbook of Formulas and Tables for Signal Processing", CRC Press LCC, 1999.

The estimated cross-correlation vector $p_{xy}$ and auto-correlation vector $r_{xx}$ are then forwarded to a first conditioner 25 and to a second conditioner 26. The cross-correlation vector $p_{xy}$ and the auto-correlation vector $r_{xx}$ are influenced by the conditioners 25, 26 such that the Multi Channel Wiener filtering problem may be solved in a recursive form as described below. From the conditioners 25, 26, the resulting coefficients $p_{xyd}$ and $r_{xxd}$ are forwarded to a calculator 27.

The calculator 27 calculates the equation of the Wiener filtering problem. In particular, the calculator 27 evaluates the solution vector $w_d$.

For that purpose, the equation of the Wiener filtering problem is partitioned into a number of equations. These equations may be calculated faster and with less processing power than the original hypermatrix type of the equation of the Wiener filtering problem.

In particular, the equation of the Wiener filtering problem which is a hypermatrix type equation, can be divided into diagonal parts and some non-diagonal partitions. The non-diagonal partitions are collected to the right side of the equation. The diagonal parts are symmetric positive definitive Toeplitz matrices. The non-diagonal partitions are also Toeplitz-like matrices. Therefore, fast Fourier transformations (so-called FFTs) may be used for the necessary matrix vector multiplications.

The solution vector $w_d$ corresponds to the diagonal parts and may be considered as the current solutions which have to be found. The vectors with the non-diagonal partitions may be considered as the previous solutions. This results in a recursive form of the equation of the Wiener filtering problem.

Based on this procedure, the calculator 27 solves the equation of the Wiener filtering problem and provides the solution vector $w_d$ as its output.

The solution vector $w_d$ is forwarded to an evaluator 28 which evaluates the quality of the received coefficients $w_d$. For that purpose, the evaluator 28 comprises criteria relating to the quality of the coefficients $w_d$. The evaluator 28 compares the received coefficients $w_d$ with these criteria and creates coefficients $w_n$.

If the evaluator 28 judges the coefficients $w_d$ to have a non-sufficient quality, the evaluator 28 does not change the current coefficients $w_n$ at its output. However, if the evaluator 28 judges the coefficients $w_d$ to have a sufficient quality, then the current coefficients $w_n$ are substituted by these coefficients $w_d$. In this case, therefore, the current coefficients $w_d$ are forwarded to the output of the evaluator 28 as new coefficients $w_n$.

Furthermore, the evaluator 28 calculates an error signal E based on the received coefficients $w_d$. This error signal E depends on the quality of the coefficients $w_d$. Both, the coefficients $w_n$ and the error signal E are forwarded to a controller 29.

First, the controller 29 generates feedback control signals F1, F2 which are provided to the first and second estimator 23, 24 and to the first and second conditioner 25, 26. The feedback control signals F1, F2 are generated as a function of the error signal E. The generation of the feedback control signals F1, F2 is carried out such that the quality of the coefficients $w_d$ is increased.

Second, the controller 29 reviews and decides whether the received coefficients $w_n$ shall be used as the solution of the Wiener filtering problem. This decision also depends on the error signal E and the prescribed tracing features, i.e. the manner how e.g. the acoustic echo cancellation system 10 is able to follow the changes of the parameters of the LEM system 13. The controller 29, therefore, allows to influence the update e.g. of the acoustic echo cancellation system 10 in order to increase its tracing capability.

If this decision is positive, the coefficients $w_n$ are forwarded as the solution vector w to a filter 30. If the decision is negative, the coefficients $w_n$ are not forwarded to the filter 30 and the current solution vector w received by the filter 30 is not changed.

In particular, the aforementioned decision depends e.g. on the following cases: Whether the room characteristic comprising the microphone 12 is stationary or not, i.e. whether the functions $H_S(s)$ and $H_E(s)/H_N(s)$ do not change rapidly or do, and whether the auto- and cross-correlations of the signals X and Y are time variant or not, i.e. whether the successive auto- and cross-correlation vectors $r_{xx}$ and $p_{xy}$ are time to time spread apart from their previous values or are close together. If the environment is not stationary due to movements in the room or if one of the signals is time variant, then the solution vector $w_d$ is updated only slowly. However, if the room comprising the microphone 12 is stationary, i.e. if the functions $H_S(s)$ and $H_E(s)/H_N(s)$ do not change rapidly, and if furthermore the correlation between the signals X and Y is time invariant, i.e. if the auto- and cross-correlation vector $r_{xx}$ and $p_{xy}$ are not spread apart from their previous values, then the solution vector $w_d$ is updated fast in order to consider the new state as fast as possible.

The filter 30 is provided for filtering the signal X. In particular, the filter 30 is realized as a so-called FIR filter (FIR = finite impulse response). Further information concerning such FIR filters may be taken from V. K. Madisetti and D. B. Williams (editors): "The Digital Signal Processing Handbook", CRC Press LCC, 1998.

The filter 30 receives the signal X as its input and generates the signal K as its output. Furthermore, the filter 30 receives the coefficients w from the controller 29. Based on the signal X and the coefficients w, the filter 30 generates the signal K. The signal K is then subtracted from the signal Y in order to generate the signal S.

As already described, the signal S does not include the signal X, i.e. it comprises only as few disturbances from the loudspeaker 14 as possible, see figures 1a and 1b. The signal K is therefore generated such that it cancels the significant parts of the signal Y which are based on the signal X.

For starting the described method, the following measures are provided:

As already described, the signal Y is forwarded to a block 20 which is shown in dashed lines. The block 20 delays the signal Y for a given period of time. This has the consequence that - after starting the described method - the first few coefficients of the solution vector $w_d$ have to be zero. The evaluator 28 are prepared to check whether this requirement is fulfilled.

If the first several coefficients of the solution vector $w_d$ are close enough to zero, then the coefficients are assumed to be correct and are forwarded to the filter 30. However, if the first coefficients are not close enough to zero, then the solution vector $w_d$ is not forwarded.

## Claims

1. A method of generating an undisturbed signal (S) out of an audio signal (Y) including a disturbing signal (X) comprising the steps of: estimating (23, 24) auto-correlation matrices and cross-correlation vectors of the equation of the Wiener filtering problem, calculating (27) the coefficients of the solution vector of the equation of the Wiener filtering problem, evaluating (28) the quality of the calculated coefficients, controlling (29) the estimation step depending on the quality of the calculated coefficients, generating (30) a correction signal (K) out of the disturbing signal (X) depending on the calculated coefficients, and correcting the audio signal (Y) depending on the correction signal (K).

2. The method of one of claim 1 comprising the step of recursively conditioning the estimated auto-correlation matrices and cross-correlation vectors.

3. The method of one of claims 1 or 2 wherein the calculation step (27) comprises the steps of dividing the hypermatrix equation of the multi-channel Wiener filtering problem into a diagonal part and some non-diagonal partitions.

4. The method of claim 3 wherein the diagonal parts are considered as Toeplitz matrices and the non-diagonal partitions are Toeplitz-like matrices.

5. The method of one of claims 3 or 4 wherein a fast Fourier transformation is used for matrix multiplications.

6. The method of one of claims 3 to 5 wherein the diagonal parts and the non-diagonal partitions result in a recursive form of the separated equations of the Wiener filtering problem.

7. The method of one of claims 1 to 6 wherein the evaluating step (28) comprises the step of deciding whether the calculated solution vector shall be used and wherein this decision depends on the quality of the solution vector.

8. The method of claim 7 wherein an error signal (E) is generated depending on the quality of the solution vector.

9. The method of one of claims 1 to 8 wherein the controlling step (29) is carried out such that the quality of the solution vector is increased.

10. The method of claim 9 wherein a feedback control signal (F1) is generated depending on the quality of the solution vector, and estimating (23, 24) the auto-correlation matrices and the cross-correlation vectors depending on the feedback control signal (F1).

11. The method of one of claims 9 or 10 wherein a feedback control signal (F2) is generated depending on the quality of the solution vector, and recursively conditioning (25, 26) the auto-correlation matrices and the cross-correlation vectors depending on the feedback control signal (F2).

12. The method of one of claims 1 to 11 wherein the generating step (30) comprises the step of filtering the disturbing signal (X) depending on the solution vector.

13. The method of claim 12 wherein a FIR filter is provided for filtering the disturbing signal (X).

14. The method of one of claims 1 to 13 comprising the step of delaying (20) the audio signal (Y).

15. A computer program comprising computer instructions for carrying out the method of one of claims 1 to 14 if the computer program is introduced into a digital computer.

16. A computer-readable medium comprising the computer program of claim 15 wherein the computer-readable medium may be introduced into a digital computer.

17. A digital computer for generating an undisturbed signal (S) out of an audio signal (Y) including a disturbing signal (X) comprising estimators (23, 24) for estimating auto-correlation matrices and cross-correlation vectors of the equation of the Wiener filtering problem, a calculator (27) for calculating the coefficients of the solution vector of the equation of the Wiener filtering problem, an evaluator (28) for evaluating the quality of the calculated coefficients, a controller (29) for controlling the estimators (23, 24) depending on the quality of the calculated coefficients, a filter (30) for generating a correction signal (K) out of the disturbing signal (X) depending on the calculated coefficients, and means for correcting the audio signal (Y) depending on the correction signal (K).

18. An electrical circuit for generating an undisturbed signal (S) out of an audio signal (Y) including a disturbing signal (X) comprising estimators (23, 24) for estimating auto-correlation matrices and cross-correlation vectors of the equation of the Wiener filtering problem, a calculator (27) for calculating the coefficients of the solution vector of the equation of the Wiener filtering problem, an evaluator (28) for evaluating the quality of the calculated coefficients, a controller (29) for controlling the estimators (23, 24) depending on the quality of the calculated coefficients, a filter (30) for generating a correction signal (K) out of the disturbing signal (X) depending on the calculated coefficients, and means for correcting the audio signal (Y) depending on the correction signal (K).

Fig. 1a

Fig. 1b

Fig. 2

EP 1 351 479 A1

EP 1 351 479 A1

<table>
<tr><td colspan="2" rowspan="2" style="text-align:left;">🌀 **European Patent**<br>**Office**</td><td rowspan="2" style="text-align:center;">**EUROPEAN SEARCH REPORT**</td><td style="text-align:center;">**Application Number**</td></tr>
<tr><td style="text-align:center;">EP 02 00 7621</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DE 198 06 015 A (SIEMENS AG) 26 August 1999 (1999-08-26) * abstract * | 1-18 | H04M9/08 |
| A | BEAUGEANT C ET AL: "New optimal filtering approaches for hands-free telecommunication terminals" SIGNAL PROCESSING. EUROPEAN JOURNAL DEVOTED TO THE METHODS AND APPLICATIONS OF SIGNAL PROCESSING, ELSEVIER SCIENCE PUBLISHERS B.V. AMSTERDAM, NL, vol. 64, no. 1, 1998, pages 33-47, XP004108822 ISSN: 0165-1684 * abstract * | 1-18 | |
| A | GUSTAFSSON S ET AL: "Combined acoustic echo control and noise reduction for hands-free telephony" SIGNAL PROCESSING. EUROPEAN JOURNAL DEVOTED TO THE METHODS AND APPLICATIONS OF SIGNAL PROCESSING, ELSEVIER SCIENCE PUBLISHERS B.V. AMSTERDAM, NL, vol. 64, no. 1, 1998, pages 21-32, XP004108821 ISSN: 0165-1684 * abstract * | 1-18 | **TECHNICAL FIELDS SEARCHED** (Int.Cl.7)<br><br>H04M |

The present search report has been drawn up for all claims

| Place of search | Date of completion of the search | Examiner |
|---|---|---|
| THE HAGUE | 19 September 2002 | Montalbano, F |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

9

## ANNEX TO THE EUROPEAN SEARCH REPORT
## ON EUROPEAN PATENT APPLICATION NO.

EP 02 00 7621

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2002

| Patent document cited in search report | | Publication date | Patent family member(s) | | Publication date |
|---|---|---|---|---|---|
| DE 19806015 | A | 26-08-1999 | DE | 19806015 A1 | 26-08-1999 |
| | | | WO | 9941897 A2 | 19-08-1999 |
| | | | EP | 1055318 A2 | 29-11-2000 |
| | | | JP | 2002503923 T | 05-02-2002 |

EPO FORM P0459

For more details about this annex : see Official Journal of the European Patent Office, No. 12/82